(19) Europäisches Patentamt
European Patent Office
Office européen des brevets

(11) EP 0 987 286 B1

(12) **EUROPEAN PATENT SPECIFICATION**

(45) Date of publication and mention of the grant of the patent:
**14.07.2004 Bulletin 2004/29**

(51) Int Cl.[7]: **C08G 77/26**

(21) Application number: **99116081.3**

(22) Date of filing: **17.08.1999**

(54) **Silicone gels and composites from sheet and tube organofunctional siloxane polymers**

Silikongele und Silikonkomposite aus organofunktionellen Schicht- und Rohr-Siloxan Polymeren

Gels et composites de silicone de polymères de siloxane de type de feuille et tube

(84) Designated Contracting States:
**DE FR GB IT NL**

(30) Priority: **17.09.1998 US 156136**

(43) Date of publication of application:
**22.03.2000 Bulletin 2000/12**

(73) Proprietor: **DOW CORNING CORPORATION
Midland Michigan 48686-0994 (US)**

(72) Inventors:
- **Chen, Chenggang
Cleveland Heights, OH 44106 (US)**
- **Katsoulis, Dimitris Elias
Midland, Michigan 48640 (US)**
- **Kennedy, Malcom Edward
Cleveland Heights, Ohio 44118 (US)**

(74) Representative:
**Sternagel, Fleischer, Godemeyer & Partner
Patentanwälte
Braunsberger Feld 29
51429 Bergisch Gladbach (DE)**

(56) References cited:
**US-A- 5 605 982** **US-A- 5 627 241**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).



Printed by Jouve, 75001 PARIS (FR)

## Description

This invention provides gels and composites made of polymers derived from naturally occurring sheet silicates, synthetic sheet silicates, naturally occurring tube silicates, and synthetic tube silicates.

While US Patent 5,605,982 (February 25, 1997) describes a process for making organopolysiloxane sheet or tube polymers by contacting a sheet or tube silicate with an alkenyl group containing chlorosilane to form an alkenylsiloxy polymer, it does not teach the reaction of a dihalosilane or a trihalosilane with a sheet silicate or a tube silicate, to produce sheet or tube-like organosiloxane polymers containing pendent groups of the particular type as described and claimed herein. The advantage of pendent organofunctional groups of the type described herein is that it allows the sheets or tubes of the siloxane polymers to crosslink to gels or composite silicone matrices.

This invention introduces gels or composites made from organopolysiloxane sheet or tube polymers which are prepared by contacting a sheet or tube silicate with an organohalosilane, in the presence of a polar solvent or in the presence of a mixture of a polar solvent and a non-polar solvent; and then heating the resulting mixture of the sheet or tube silicate, the organohalosilane, and the solvent, until an organopolysiloxane sheet or tube polymer is formed.

The claimed gels herein are prepared by mixing the product organopolysiloxane sheet or tube polymer with a curable matrix comprising an organosilicon component preferably an alkoxysilane, and thereafter allowing the mixture to stand at room temperature or above, for a time sufficient for gelation to occur. Normally, this time ranges from four to sixty hours.

The composites claimed herein (articles of manufacture such as bulk composites, composite coatings and composite films) are prepared by exposing the gel to air, and allowing the gel to stand at room temperature or above, for a time sufficient for the gel to cure. Normally, this time ranges from four to sixty hours.

This invention is directed to the preparation, identification and utilization of composite systems prepared from exfoliated sheet organofunctional siloxane polymers in silicone matrices. It also describes the synthesis and utilization of composite systems from opened tube organofunctional siloxane polymers and silicone matrices. These sheet and tube polymers are conveniently derived from naturally occurring or synthetic, sheet and tube silicates.

For preparing our composite, the sheet or tube organofunctional siloxane polymer is first mixed at room temperature (20-25°C.) with a curable silicone matrix, e.g., an alkoxysilane, and then allowed to cure. Said silicone matrix should possess a strong intermolecular attraction with the sheet or tube polymer, sufficient to cause its exfoliation or opening. This process results in an increase in the viscosity of the matrix and the expeditious formation of a transparent, translucent or opaque gel.

Complete exfoliation of our sheet polymers is determined from the loss of the low angle powder X-ray diffractometry (XRD) reflection which characterizes interlayer spacing for sheet polymers. Strong intermolecular attraction between the matrix and the sheet or tube polymer is easily provided by using materials having the same or similar organo groups.

For example, an apophyllite-derived bis-(3-cyanopropyl)hydroxysiloxy sheet polymer, or a 3-cyano-propylmethylhydroxysiloxy sheet polymer, is conveniently exfoliated, and will readily form composites in alkoxysilanes such as 2-cyanoethyltrimethoxysilane, 2-cyanoethyltriethoxy-silane, 3-cyanopropyltrimethoxysilane, 3-cyanopropyltriethoxysilane, 3-cyanopropylmethyldimethoxy-silane, bis-(3-cyanopropyl)dimethoxysilane, (cyanomethylphenethyl)-trimethoxysilane and 11-cyanoundecyltrimethoxysilane.

While the type of silicone matrix preferred herein is a condensation cure system, such as described above, other curing systems typically employed in silicone technology can be used. For example, hydrosilylation cure, photocure, free-radical cure, or peroxide cure systems are suitable providing the matrix has accessible silanol or alkoxy groups.

The resulting composites are useful as films and coatings, such as gas barriers, high temperature coatings or fire resistant materials. They are also useful as high strength monoliths due to the substantial or complete exfoliation of the sheet polymer and the substantial or complete opening of the tube polymer. In addition, these materials are also capable of functioning as components of sealant formulations, resin matrix composites, elastomers and gels.

The sheet silicate most preferred herein is the mineral apophyllite, $KCa_4Si_8O_{20}(F,OH)\cdot 8H_2O$, while the most preferred tube silicate is a synthetic silicate $K_2CuSi_4O_{10}$. Other natural or synthetic layered and tube silicates can also be used, such as magadiite, $Na_2Si_{14}O_{29}\cdot 7H_2O$; kenyaite, $Na_2Si_{22}O_{45}\cdot 9H_2O$; silinaite, $NaLiSi_2O_5\cdot 2H_2O$; or chrysotile, $Mg_3(OH)_4Si_2O_5$. These silicates are commercially available and they may be purchased from supply houses such as Ward's Natural Science Establishment, Rochester, New York; and Gelest, Tullytown, Pennsylvania.

Methods of preparing tube silicates such as $K_2CuSi_4O_{10}$ are described in various publications including US Patents 4,942,026, 5,605,982 and 5,627,241; Polymer Preprints (American Chemical Society, Division of Polymer Chemistry) Volume 32(3), Pages 508-509, (1991); or Colloids and Surfaces, Volume 63, Pages 139-149, (1992).

According to our invention, a typical synthesis involves the reaction of a halosilane, e.g., $R_2SiX_2$ or $RSiX_3$, where X is a halogen atom, with a sheet silicate or a tube silicate to produce a sheet-like or tube-like organosiloxane polymer that contains pendent organofunctional groups.

The halosilane is a dichlorosilane or a trichlorosilane represented by the formula $R^1R^2SiCl_2$ or $R^1SiCl_3$ where $R^1$ and $R^2$ are each independently selected from an alkyl group containing 1-30 carbon atoms; a non-reactive group such as aryl, alkaryl, aralkyl or a polar group such as cyanoalkyl. Most preferably, at least one $R^1$ or $R^2$ group in the halosilane is a polar group. Representative of other groups besides an alkyl group are aryl groups such as phenyl or xenyl; alkaryl (alkylaryl) groups such as tolyl or xylyl; and aralkyl (arylalkyl) groups such as benzyl, phenylethyl and 2-phenylpropyl.

Suitable dichlorosilanes or trichlorosilanes are 2-cyanoethylmethyldichlorosilane, $(NCCH_2CH_2)(CH_3)SiCl_2$; 3-cyanopropylmethyldichlorosilane, $(NCCH_2CH_2CH_2)(CH_3)SiCl_2$; or $(NCC_3H_6)(CH_3)SiCl_2$; 3-cyanopropylphenyldichlorosilane, $(NCCH_2CH_2CH_2)(C_6H_5)SiCl_2$; bis-(3-cyanopropyl)dichlorosilane, $(NCCH_2CH_2CH_2)_2SiCl_2$; 3-cyanobutylmethyldichlorosilane, $(NCCH(CH_3)CH_2CH_2)(CH_3)SiCl_2$; 2-cyanoethyltrichlorosilane, $(NCCH_2CH_2)SiCl_3$; 3-cyanopropyltrichlorosilane, $(NCCH_2CH_2CH_2)SiCl_3$ and 3-cyanobutyltrichlorosilane, $(NCCH(CH_3)CH_2CH_2)SiCl_3$.

The reaction is carried out in the presence of a solvent. Representative polar solvents which are useful herein include N,N-dimethylformamide (DMF), dimethyl sulfoxide (DMSO), 1-methyl-2-pyrrolidinone, 1,3-dimethyl-3,4,5,6-tetrahydro-2(1H)-pyrimidinone (DMPU), and mixtures thereof. The reaction can also be carried out in the presence of a mixture of a polar solvent and a non-polar solvent, such as a mixture of N,N-dimethylformamide and toluene.

For convenience, the following abbreviations are used to identify our sheet polymers. Thus, A-$C_2H$ is used for the apophyllite-derived bis-(3-cyanopropyl)hydroxysiloxy sheet polymer having the formula $[((NCC_3H_6)_2(HO)SiO)_x(HO)_{1-x}SiO_{1.5}]_n$; while A-CMH is used for the apophyllite-derived 3-cyanopropylmethylhydroxysiloxy sheet polymer having the formula $[((NCC_3H_6)(CH_3)(HO)SiO)_x(HO)_{1-x}SiO_{1.5}]_n$.

In these formulas, the value of "x" is determined by solid state nuclear magnetic resonance (NMR) and, typically, x is equal to or less than 0.60. However, a value for "n" is not readily determinable.

As used herein, the term "exfoliated" means a substantial or complete separation or disassociation of the individual sheets of a sheet polymer, and the term "opened" means a substantial or complete separation of the tubes of a tube polymer.

The following examples illustrate this invention in more detail as it relates to an A-CMH-$(NCC_2H_4)Si(OCH_3)_3$ composite.

Example 1 - Synthesis of Apophyllite-Derived 3-Cyanopropylmethylhydroxysiloxy Sheet Polymer, $[((NCC_3H_6)(CH_3)(HO)SiO)_x(HO)_{1-x}SiO_{1.5}]_n$, A-CMH

A suspension of apophyllite (120 mesh (0.125 mm). 3.0 g, 3.3 mmol), 3-cyanopropylmethyldichlorosilane $(NCC_3H_6)(CH_3)SiCl_2$ (24 mL, 0.15 mol), and dimethylformamide (120 mL) was refluxed for 2.3 hours and filtered. The solid was washed with hexane (150 mL), acetone (60 mL), a solution of water and acetone (1:1, 300 mL), and hexane (150 mL), dried (60 torr (8.0 kPa), 60°C.), and weighed (3.1 g). The following are the product powder X-ray diffractometry (XRD) data (d(Å) ($I/I_0$)): 16.7 (100). The following are the product infrared (IR) spectroscopy data (evaporated acetone-gel coating on KBr, $cm^{-1}$): 3446 (m br, H-bonded OH stretch), 2938 (m, CH stretch), 2890 (m, CH stretch), 2246 (m, CN stretch), 1456 (w), 1424 (m), 1350 (w, CH deformation), 1268 (s, SiC), 1058 (vs br, SiOSi stretch), 866 (w), 796 (s), 666 (w), 540 (w), 440 (s).

This synthesis of apophyllite-derived 3-cyanopropylmethylhydroxysiloxy sheet polymer, $[((NCC_3H_6)(CH_3)(HO)SiO)_x(HO)_{1-x}SiO_{1.5}]_n$, A-CMH, occurs by the following reaction:

$$KCa_4Si_8O_{20}(F,OH)\cdot 8H_2O + (NCC_3H_6)(CH_3)SiCl_2$$

$$\rightarrow [((NCC_3H_6)(CH_3)(HO)SiO)_x(HO)_{1-x}SiO_{1.5}]_n$$

Evidence for the formation of this A-CMH polymer as depicted above is provided by the presence of OH, CH, CN and SiO bands in its infrared spectrum, and by the presence of a strong line in its X-ray powder pattern at 16.7 Å (1.67 nm). The intensity and narrowness of the line in its powder pattern indicates that its sheets are quite planar and are stacked in orderly stacks.

<u>Example 2 - Gel</u>

A mixture of A-CMH (0.16 g) and 2-cyanoethyltri-methoxysilane $(NCC_2H_4)Si(OCH_3)_3$ (1.9 g) was allowed to stand at room temperature for 1 day in a closed vial. The resulting gel was cloudy and stiff.

Example 3 - Bulk Composite

The A-CMH-$(NCC_2H_4)Si(OCH_3)_3$ gel prepared in Example 2 was exposed to air at room temperature for 3 days. The following are the product XRD data (d(Å) $(I/I_0)$): 10.6 (100), 3.9 (br, 43). The bulk composite was a hard, white solid.

Example 4 - Composite Coating

A thin layer of the A-CMH-$(NCC_2H_4)Si(OCH_3)$ gel prepared in Example 2 was spread on a glass microscope slide, and exposed to air at room temperature for 1 day. The following are the product XRD data (d(Å) $(I/I_0)$): 10.4 (100), 4.0 (br, 31). The composite coating was white and loosely adherent.

Example 5 - Film Composite

A thin layer of the A-CMH-$(NCC_2H_4)Si(OCH_3)_3$ gel prepared in Example 2 was spread on a Teflon® sheet and exposed to air at room temperature for 1 day. The resulting film was then gently separated from the sheet. The following are the product XRD data (d(Å) $(I/I_0)$): 10.4 (100), 3.9 (br, 50). The film was white and brittle.

Example 6 - Physical Mixture for Comparison

$(NCC_2H_4)Si(OCH_3)_3$ (1.6 g) was exposed to air at room temperature for 4 days. The resulting white solid (0.95 g) was ground with a mortar and pestle, and the powder was mixed with the A-CMH (81 mg). The following are the product XRD data (d(Å) $(I/I_0)$): 17.0 (23), 10.4 (100), 4.0 (br. 24).

The absence of ~17 Å line in the powder patterns of the bulk composite, the coating composite, and the film composite, and the presence of an ~17 Å line in the patterns of A-CMH itself, and a mixture of A-CMH and cured $(NCC_2H_4)Si(OCH_3)_3$ (which had a smaller percentage of A-CMH than the composite), all show that the sheets of the A-CMH in the bulk composite, the coating composite, and the film composite are substantially or fully exfoliated.

Synthesis of the gel and the composite under very mild conditions, i.e., at room temperature and in the absence of an added catalyst, also provided strong evidence that the sheets of the composite are not degraded.

Since the pendent groups on the sheets carry accessible silanol groups, it is believed that the sheets become crosslinked to the composite matrix. A curing reaction leading to the composite is conveniently approximated as:

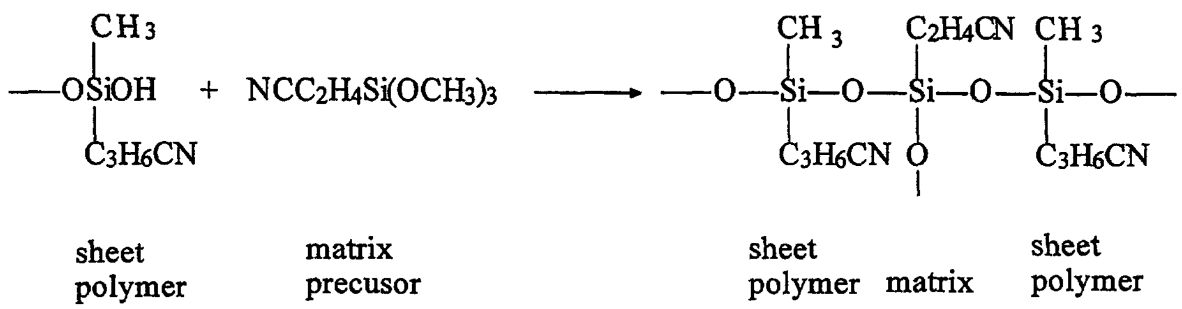


The hardness of the resulting composite is attributed to the three-dimensional crosslinking present in our composite. The white color of the composite is ascribed to a mismatch between the index of refraction of A-CMH and the matrix.

The ability of $(NCC_2H_4)Si(OCH_3)_3$ to form such a composite is attributed to the polyfunctional nature of this particular silane. In this regard, the nitrile functionality provides the silane with the ability to serve as an effective exfoliating agent, while the three methoxysilane functionalities provide the silane with the ability to serve as an effective crosslinking agent. Noteworthy for this silane are the mildness of the conditions required for both gel formation and for gel curing.

Since the conversion of the gel to the composite involves only the loss of $CH_3OH$, and not loss of the whole silane, the composite is compact and is not an aerogel.

The following additional examples are set forth for the purpose of illustrating the invention in still more detail as it relates to an A-CMH-$(NCC_3H_6)(CH_3)Si(OCH_3)_2$ composite.

Example 7 - Synthesis of Apophyllite-Derived 3-Cyanopropylmethylhydroxysiloxy Sheet Polymer, $[((NCC_3H_6)(CH_3)(HO)SiO)_x(HO)_{1-x}SiO_{1.5}]_n$, A-CMH

A-CMH was made as described above in Example 1.

Example 8 - Gel

A mixture of A-CMH (0.15 g) and 3-cyanopropylmethyldimethoxysilane $(NCC_3H_6)Si(CH_3)(OCH_3)_2$ (0.85 g) was allowed to stand at room temperature for 1 day in a closed vial. The resulting gel was cloudy and stiff.

Example 9 - Bulk Composite

The A-CMH-$(NCC_3H_6)Si(CH_3)(OCH_3)_2$ gel prepared in Example 8 was exposed to air for 4 days. The following are the product XRD data (d(Å) ($I/I_0$)): 10.4 (100), 4.0 (br, 33). The bulk composite was cloudy and relatively pliable.

The absence of ~17Å line in the powder pattern of the bulk composite and the presence of such a line in the pattern of the A-CMH composition leads to the conclusion that the sheets in the bulk composite were substantially or completely delaminated. The mild conditions used for the preparation of the gel and the composite suggest that the sheets in the gel and in the composite are not degraded. An approximation of the composite crosslinking reaction is:

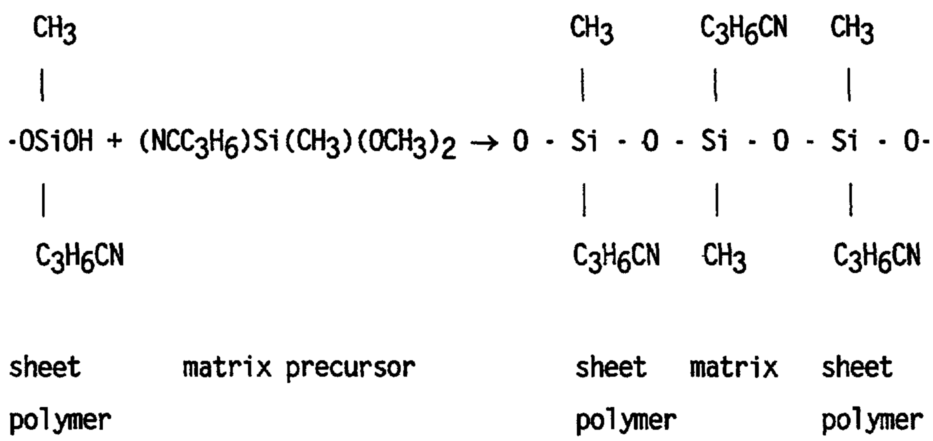


Cloudiness in the appearance of this composite was ascribed to a refractive index mismatch, as noted above. The pliability of the composite was attributed to the presence of two, rather than three, methoxy groups in the matrix forming the silane, as this factor leads to less crosslinking. Again, the ease of synthesis of the composite is notable.

The following further examples are set forth for the purpose of illustrating our invention in yet more detail as it relates to an A-$C_2$H-$(NCC_2H_4)Si(OCH_3)_3$ composite.

Example 10 - Synthesis of Apophyllite-Derived Bis-(3-cyanopropyl)hydroxysiloxy Sheet Polymer, $[((NCC_3H_6)_2(HO)SiO)_x(HO)_{1-x}\text{-}SiO_{1.5}]_n$, A-$C_2$H

A suspension of apophyllite (120 mesh (0.125 mm), 1.2 g, 1.3 mmol), bis-(3-cyanopropyl)dichlorosilane $(NCC_3H_6)_2SiCl_2$ (10 mL, 50 mmol), and dimethylformamide (20 mL), was refluxed for 1.5 hours and filtered. The solid was washed with hexane (60 mL), acetone (30 mL), a solution of water and acetone (1:1, 100 mL), and hexane (60 mL), air-dried, and weighed (1.24 g). The following are the product XRD data (d(Å) ($I/I_0$)): 17.6 (100). The following are the product infrared (IR) spectroscopy data (evaporated acetone-gel coating on KBr, $cm^{-1}$): 3384 (s br, H-bonded OH stretch), 2938 (s, CH stretch), 2884 (m, CH stretch), 2246 (s, CN stretch), 1454 (w), 1424 (m), 1352 (w), 1066 (vs br, SiOSi stretch), 866 (w), 786 (s), 442 (s).

This synthesis of apophyllite-derived bis-(3-cyanopropyl)methylhydroxysiloxy sheet polymer, $[((NCC_3H_6)_2(HO)SiO)_xHO)_{1-x}SiO_{1.5}]_n$, A-$C_2$H, is similar to that of the synthesis of A-CMH shown previously. The reaction is depicted as:

$$KCa_4Si_8O_{20}(F,OH)\cdot 8H_2O + (NCC_3H_6)_2SiCl_2$$

$$\rightarrow [((NCC_3H_6)_2(HO)SiO)_x(HO)_{1-x}SiO_{1.5}]_n$$

Evidence for the formation of this A-$C_2$H polymer is provided by the presence of strong OH, CH, CN and SiO bands in its infrared spectrum, and by the presence of a line in its X-ray powder pattern at 17.6 Å (1.76 mm). The considerable intensity of its powder pattern line indicates that the sheets of the polymer are quite planar, and that they are stacked in an orderly fashion.

Example 11 - Gel

A mixture of A-$C_2$H (0.14 g) and 2-cyanoethyltri-methoxysilane, $(NCC_2H_4)Si(OCH_3)_3$, (1.5 g) was allowed to stand at room temperature for 1 day in a closed vial. The product gel was cloudy and stiff.

Example 12 - Bulk Composite

The A-$C_2$H-$(NCC_2H_4)Si(OCH_3)_3$ gel prepared in Example 11 was exposed to air at room temperature for 3 days. The following are the product XRD data (d(Å) ($I/I_0$)): 10.5 (100), 3.9 (br, 35). The bulk composite was a hard, white solid.

Example 13 - Physical Mixture for Comparison

$(NCC_2H_4)Si(OCH_3)_3$ (2.5 g) was exposed to air at room temperature for 3 days. The resulting solid was ground and the powder was mixed with A-$C_2$H (0.14 g). The following are the product XRD data (d(Å) ($I/I_0$)): 17.0 (23), 10.4 (100), 4.0 (br, 24).

The presence of a clear ~17 Å line in the powder pattern of the physical mixture, but not in that of the composite, provides evidence that the composite contained near or fully delaminated sheets. The absence of an ~17 Å line in the powder pattern of the bulk composite, and the presence of such a line in the pattern of the A-$C_2$H composition itself, and the mixture of A-$C_2$H and cured $(NCC_2H_4)Si(OCH_3)_3$ (which had a lower percentage of A-$C_2$H than the composite) all lead to the conclusion that the sheets in the bulk composite were substantially or fully delaminated. The synthesis of the gel and the synthesis of the composite under very mild conditions indicates that sheets of the gel and the sheets of the composite are not degraded. The composite curing reaction is approximated as:

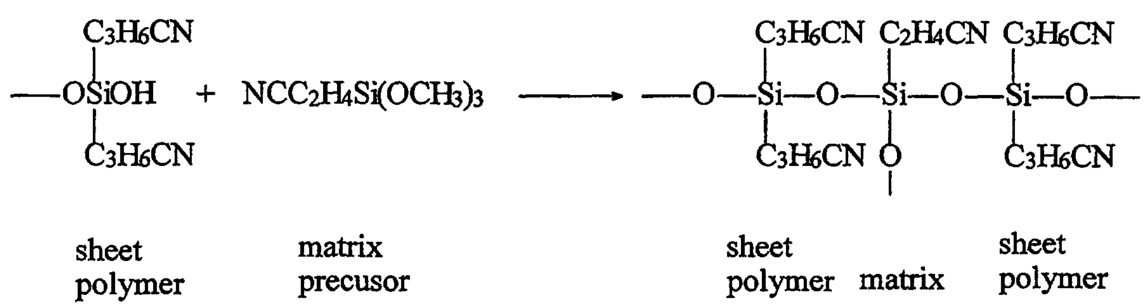


The hardness and the color of this composite is explained the same as for the composite made from the A-CMH-$(NCC_2H_4)Si(OCH_3)_3$ gel (Example 1) noted above. The mildness of the conditions required for the formation of the gel and for the formation of the composite are surprising.

These examples demonstrate that certain alkoxysilanes are capable of yielding fully exfoliated, compact composites, with A-CMH or with A-$C_2$H.

## Claims

1. A method of making a gel from an organopolysiloxane sheet or tube polymer comprising first contacting a sheet or tube silicate with an organohalosilane, in the presence of a polar solvent or in the presence of a mixture of a

polar solvent and a non-polar solvent; then heating the resulting mixture of the sheet or tube silicate, the organohalosilane, and the solvent, until an organopolysiloxane sheet or tube polymer is formed; the organohalosilane being a dihalosilane or trihalosilane having the formula $R^1R^2SiX_2$ or $R^1SiX_3$, wherein X represents a halogen atom; $R^1$ and $R^2$ each independently represent an alkyl group containing 1-30 carbon atoms, an aryl group, an alkaryl group, an aralkyl group or a polar alkyl group; thereafter mixing the organopolysiloxane sheet or tube polymer with a curable matrix comprising an organosilicon component, whereby the matrix provides accessible silanol or alkoxy groups; and subsequently allowing the mixture of the organopolysiloxane sheet or tube polymer and the matrix to stand at room temperature or above, for a time sufficient for gelation to occur.

**2.** The method according to claim 1, wherein the matrix comprises an alkoxysilane.

**3.** The method according to any of the preceding claims, whereby at least one of $R^1$ and $R^2$ in the formulae of the organohalosilane is cyanoalkyl.

**4.** A method according to claim 3 in which the organohalosilane is a compound selected from the group consisting of 2-cyanoethylmethyldichlorosilane, $(NCCH_2CH_2)(CH_3)SiCl_2$; 3-cyanopropylmethyldichlorosilane, $(NCCH_2CH_2CH_2)(CH_3)SiCl_2$: 3-cyanopropylphenyldichlorosilane, $(NCCH_2CH_2CH_2)(C_6H_5)SiCl_2$; bis-3-(cyanopropyl)dichlorosilane, $(NCCH_2CH_2CH_2)_2SiCl_2$: 3-cyanobutylmethyldichlorosilane, $(NCCH(CH_3)CH_2CH_2)(CH_3)SiCl_2$; 2-cyanoethyltrichlorosilane, $(NCCH_2CH_2)SiCl_3$; 3-cyanopropyltrichlorosilane, $(NCCH_2CH_2CH_2)SiCl_3$; and 3-cyanobutyltrichlorosilane, $(NCCH(CH_3)CH_2CH_2)SiCl_3$.

**5.** The method according to any of the preceding claims in which the silicate is selected from the group consisting of apophyllite $KCa_4Si_8O_{20}(F,OH)\cdot 8H_2O$, $K_2CuSi_4O_{10}$, magadiite $Na_2Si_{14}O_{29}\cdot 7H_2O$; kenyaite $Na_2Si_{22}O_{45}\cdot 9H_2O$; silinaite $NaLiSi_2O_5\cdot 2H_2O$; and chrysolite $Mg_3(OH)_4Si_2O_5$.

**6.** The method according to any of the preceding claims in which the solvent is selected from the group consisting of N,N-dimethylformamide, dimethyl sulfoxide, 1-methyl-2-pyrrolidinone, 1,3-dimethyl-3,4,5,6-tetrahydro-2(1H)-pyrimidinone and mixtures thereof with toluene.

**7.** The method according to any of the preceding claims in which the alkoxysilane is a compound selected from the group consisting of 2-cyanoethyltrimethoxysilane, 2-cyanoethyltriethoxysilane, 3-cyanopropyltrimethoxysilane, 3-cyanopropyltriethoxysilane, 3-cyanopropylmethyldimethoxy-silane, bis-(3-cyanopropyl)-dimethoxysilane, (cyanomethylphenethyl)trimethoxysilane and 11-cyanoundecyltrimethoxysilane.

**8.** The method according to any of claims 2-7 comprising the making an article of manufacture selected from the group consisting of a bulk composite, a composite coating, and a composite film, obtainable by exposing the gel of any of claims 2-7 to air, and allowing said gel to stand at room temperature or above, for a time sufficient for the gel to cure.

**9.** Gel obtainable by a process according to any of claims 1-7.

**10.** Article of manufacture obtainable by a process according to claim 8.

## Patentansprüche

**1.** Verfahren zur Herstellung eines Gels aus einem Organopolysiloxanblatt- oder -röhrenpolymer, umfassend:

zuerst Inkontaktbringen eines Blatt- oder Röhrensilicats mit einem Organohalogensilan in Gegenwart eines polaren Lösungsmittels oder in Gegenwart einer Mischung eines polaren Lösungsmittels und eines nichtpolaren Lösungsmittels,
dann Erwärmen der resultierenden Mischung des Blatt- oder Röhrensilicats, des Organohalogensilans und des Lösungsmittels, bis ein Organopolysiloxanblatt- oder -röhrenpolymer ausgebildet ist, wobei das Organohalogensilan ein Dihalogensilan oder Trihalogensilan der Formel $R^1R^2SiX_2$ oder $R^1SiX_3$ ist, worin X für ein Halogenatom steht, $R^1$ und $R^2$ jeweils unabhängig voneinander für eine Alkylgruppe mit 1-30 Kohlenstoffatomen, eine Arylgruppe, eine Alkarylgruppe, eine Aralkylgruppe oder eine polare Alkylgruppe stehen,
danach Mischen des Organopolysiloxanblatt- oder -röhrenpolymers mit einer härtbaren Matrix, enthaltend eine Organosiliciumkomponente, wobei die Matrix zugängliche Silanol- oder Alkoxygruppen bereitstellt, und

danach Stehenlassen der Mischung des Organopolysiloxanblatt- oder - röhrenpolymers und der Matrix bei Raumtemperatur oder darüber für eine ausreichende Zeit, damit Gelierung eintritt.

2. Verfahren nach Anspruch 1, wobei die Matrix ein Alkoxysilan enthält.

3. Verfahren nach einem der vorstehenden Ansprüche, wobei wenigstens eins von $R^1$ und $R^2$ in den Formeln für das Organohalogensilan Cyanoalkyl ist.

4. Verfahren nach Anspruch 3, in dem das Organohalogensilan eine Verbindung ist, die ausgewählt ist aus der Gruppe bestehend aus 2-Cyanoethylmethyldichlorsilan, $(NCCH_2CH_2)(CH_3)SiCl_2$; 3-Cyanopropylmethyldichlorsilan, $(NCCH_2CH_2CH_2)(CH_3)SiCl_2$; 3-Cyanopropylphenyldichlorsilan, $(NCCH_2CH_2CH_2)(C_6H_5)SiCl_2$; Bis-3-(cyanopropyl)-dichlorsilan, $(NCCH_2CH_2CH_2)_2SiCl_2$; 3-Cyanobutylmethyldichlorsilan, $(NCCH(CH_3)CH_2CH_2)(CH_3)SiCl_2$; 2-Cyanoethyltrichlorsilan, $(NCCH_2CH_2)SiCl_3$; 3-Cyanopropyltrichlorsilan, $(NCCH_2CH_2CH_2)SiCl_3$ und 3-Cyanobutyltrichlorsilan, $(NCCH(CH_3)CH_2CH_2)SiCl_3$,

5. Verfahren nach einem der vorstehenden Ansprüche, in dem das Silicat ausgewählt ist aus der Gruppe bestehend aus Apophyllit $KCa_4Si_8O_{20}(F,OH)\cdot 8H_2O$, $K_2CuSi_4O_{10}$, Magadiit $Na_2Si_{14}O_{29}\cdot 7H_2O$, Kenyait $Na_2Si_{22}O_{45}\cdot 9H_2O$, Silinait $NaLiSi_2O_5\cdot 2H_2O$ und Chrysolit $Mg_3(OH)_4Si_2O_5$.

6. Verfahren nach einem der vorstehenden Ansprüche, in dem das Lösungsmittel ausgewählt ist aus der Gruppe bestehend aus N,N-Dimethylformamid, Dimethylsulfoxid, 1-Methyl-2-pyrrolidinon, 1,3-Dimethyl-3,4,5,6-tetrahydro-2(1H)-pyrimidinon und Mischungen davon mit Toluol.

7. Verfahren nach einem der vorstehenden Ansprüche, in dem das Alkoxysilan eine Verbindung ist, die ausgewählt ist aus der Gruppe bestehend aus 2-Cyanoethyltrimethoxysilan, 2-Cyanoethyltriethoxysilan, 3-Cyanopropyltrimethoxysilan, 3-Cyanopropyltriethoxysilan, 3-Cyanopropylmethyldimethoxysilan, Bis-(3-cyanopropyl)-dimethoxysilan, (Cyanomethylphenethyl)trimethoxysilan und 11-Cyanoundecyltrimethoxysilan.

8. Verfahren nach einem der Ansprüche 2-7, umfassend das Herstellen eines Erzeugnisses, ausgewählt aus der Gruppe bestehend aus einem Verbundmaterial, einer Verbundbeschichtung und einer Verbundfolie, erhältlich durch Aussetzen des Gels nach einem der Ansprüche 2-7 an Luft und Stehenlassen dieses Gels bei Raumtemperatur oder darüber für einen Zeitraum, der ausreicht, um das Gel zu härten.

9. Gel, erhältlich nach einem Verfahren nach einem der Ansprüche 1-7.

10. Gegenstand, erhältlich nach einem Verfahren nach Anspruch 8.

**Revendications**

1. Méthode de fabrication d'un gel à partir d'un polymère organopolysiloxane du type tube ou feuille comprenant premièrement la mise en contact d'un silicate du type tube ou feuille avec un organohalogénosilane, en présence d'un solvant polaire ou en présence d'un mélange d'un solvant polaire et d'un solvant non-polaire ; puis le chauffage du mélange obtenu constitué par le silicate du type tube ou feuille, l'organohalogénosilane et le solvant, jusqu'à ce qu'il se forme un organopolysiloxane du type tube ou feuille ; l'organohalogénosilane étant un dihalogénosilane ou un trihalogénosilane ayant pour formule $R^1R^2SiX_2$ ou $R^1SiX_3$, où X représente un atome d'halogène ; $R^1$ et $R^2$ représentent chacun de façon indépendante un groupe alkyle contenant 1 à 30 atomes de carbone, un groupe aryle, un groupe alkaryle, un groupe aralkyle ou un groupe alkyle polaire ; ensuite le mélange du polymère organopolysiloxane du type tube ou feuille avec une matrice durcissable comprenant un composant organosilicié, la matrice apportant des groupes silanol ou alcoxy accessibles et enfin la mise au repos du mélange du polymère organopolysiloxane du type tube ou feuille et de la matrice à une température égale ou supérieure à la température ambiante pour qu'il se produise une gélification.

2. Méthode selon la revendication 1, dans laquelle la matrice comprend un alcoxysilane.

3. Méthode selon l'une quelconque des revendications précédentes, dans laquelle au moins un des $R^1$ et $R^2$ dans les formules de l'organohalogénosilane est un groupe cyanoalkyle.

4. Méthode selon la revendication 3, dans laquelle l'organohalogénosilane est un composé choisi dans le groupe constitué par le 2-cyanoéthylméthyldichlorosilane, $(NCCH_2CH_2)(CH_3)SiCl_2$; le 3-cyanopropyl-méthyldichlorosilane, $(NCCH_2CH_2CH_2)(CH_3)SiCl_2$; le 3-cyanopropylphényl-dichlorosilane, $(NCCH_2CH_2CH_2)(C_6H_5)SiCl_2$; le bis (3-cyanopropyl)dichloro-silane, $(NCCH_2CH_2CH_2)_2SiCl_2$; le 3-cyanobutylméthyldichlorosilane, $(NCCH(CH_3)CH_2CH_2)(CH_3)SiCl_2$; le 2-cyanoéthyltrichlorosilane, $(NCCH_2CH_2)SiCl_3$; le 3-cyanopropyltrichlorosilane, $(NCCH_2CH_2CH_2)SiCl_3$ et le 3-cyanobutyltrichlorosilane, $(NCCH(CH_3)CH_2CH_2)SiCl_3$.

5. Méthode selon l'une quelconque des revendications précédentes dans laquelle le silicate est choisi dans le groupe constitué par l'apophyllite $KCa_4Si_8O_{20}(F,OH).8H_2O$; $K_2CuSi_4O_{10}$; la magadiite $Na_2Si_{14}O_{29}.7H_2O$; la kenyaïte $Na_2Si_{22}O_{45}.9H_2O$; la silinaïte $NaLiSi_2O_5.2H_2O$ et la chrysolite $Mg_3(OH)_4Si_2O_5$.

6. Méthode selon l'une quelconque des revendications précédentes, dans laquelle le solvant est choisi dans le groupe constitué par le N,N-diméthylformamide, le diméthylsulfoxyde, la 1-méthyl-2-pyrrolidinone, la 1,3-diméthyl-3,4,5,6-tétrahydro-2(1H)-pyrimidinone et les mélanges de ceux-ci avec le toluène.

7. Méthode selon l'une quelconque des revendications précédentes, dans laquelle l'alcoxysilane est un composé choisi dans le groupe constitué par le 2-cyanoéthyltriméthoxysilane, le 2-cyanoéthyltriéthoxysilane, le 3-cyanopropyltriméthoxysilane, le 3-cyanopropyltriéthoxysilane, le 3-cyanopropylméthyldiméthoxysilane, le bis-(3-cyanopropyl)diméthoxysilane, le (cyanométhylphénéthyl)triméthoxysilane et le 11-cyanoundécyltriméthoxysilane.

8. Méthode selon l'une quelconque des revendications 2 à 7, comprenant la fabrication d'un article manufacturé choisi dans le groupe constitué par un produit composite dans sa masse, un revêtement composite et un film composite, pouvant être obtenu en exposant le gel selon l'une quelconque des revendications 2 à 7 à l'air et la mise au repos dudit gel à une température égale ou supérieure à la température ambiante pendant une durée suffisante pour que le gel durcisse.

9. Gel pouvant être obtenu par un procédé selon l'une quelconque des revendications 1 à 7.

10. Article manufacturé pouvant être obtenu par un procédé selon la revendication 8.